# EUROPÄISCHE PATENTANMELDUNG

(11) **EP 1 261 149 A1**
(43) Veröffentlichungstag der Anmeldung: **27.11.2002**
(21) Anmeldenummer: 01112582.0
(22) Anmeldetag: 23.05.2001
(51) Int. Cl.: H04B 7/26, H04B 3/54, H04J 3/06

(54) **Mobilfunk-Kommunikationssystem mit Referenzsignalgeber**

(71) Anmelder: SIEMENS AKTIENGESELLSCHAFT, 80333 München (DE)
(72) Erfinder: Hertel, Guenther, Dr., 82223 Eichenau (DE); Hauth, Stephan, 89081 Ulm (DE)

(57) **Zusammenfassung**

Die Erfindung betrifft ein Mobilfunk-Kommunikationssystem, bestehend aus einem Kernnetz (CN) und einem Funk-Zugangsnetz (RAN) mit zumindest einer Funknetz-Steuereinrichtung (RC), an der mehrere Basisstationen (BS) angeschlossen sind, die mit mobilen Stationen (UE) über Funk kommunizieren. Zur Synchronisation der Basisstationen mit den Funknetz-Steuereinrichtungen (RC) wird vorgeschlagen, einen Taktgeber vorzusehen, mit dem ein Synchronisationssignal über das Stromnetz (10) an die Basisstationen (BS) übertragen wird.

## Beschreibung

Die Erfindung betrifft ein Mobilfunk-Kommunikationssystem mit einem Referenzsignalgeber zur Synchronisation von Basisstationen mit Funknetz-Steuereinrichtungen gemäß dem Oberbegriff des Patentanspruchs 1.

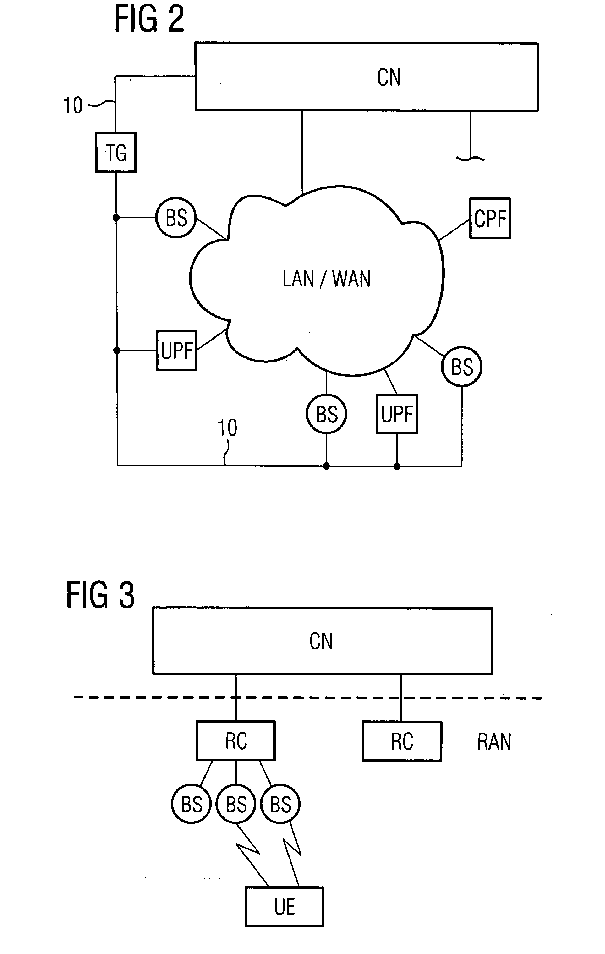

Mobilfunk-Kommunikationssysteme können in ein Kernnetz CN, in dem Nutz- und Signalisierungsdaten einer Vielzahl von Endgeräten über weite Strecken leitungsgebunden befördert werden, und ein Funkzugangsnetz (RAN: Radio Access Network) aufgeteilt werden, welches im Allgemeinen eine Mehrzahl von physikalischen Netzwerkknoten, insbesondere Funknetz-Steuereinrichtungen RC (RC: Radio Controller) umfasst, deren Aufgabe es ist, von den Endgeräten empfangene Daten in ein für die Übertragung auf dem Kernnetz CN geeignetes Format umzusetzen und umgekehrt das Format der vom Kernnetz empfangenen Daten an die Funkübertragung anzupassen und an diejenige Basisstation BS weiterzuleiten, in deren Sendebereich sich das betreffende Endgerät befindet. Ein solches Kommunikationssystem ist in Fig. 3 gezeigt.

Die zu leitenden Daten umfassen einerseits Nutzdaten, d.h. Daten, die zwischen zwei Benutzern (von denen mindestens einer eine mobile Station nutzt) übermittelt werden sollen, und andererseits Signalisierungsdaten, die zur Steuerung interner Vorgänge des Mobilfunk-Kommunikationssystems erzeugt und verarbeitet werden.

Im Funkzugangsnetz RAN kann zwischen Funktionalitäten, die für die Übertragung von Nutzdaten, und Funktionalitäten, die für die Übertragung und Verarbeitung der Signalisierungsdaten verantwortlich sind, unterschieden werden. Erstere werden als Teilnehmerebenenfunktionen (UPF: User Plane Functions) und letztere als Steuerebenenfunktionen (CPF: Control Plane Functions) bezeichnet.

Die Kommunikation einer Basisstation BS mit einer mobilen Station UE erfolgt über Mehrfachkanalzugriffsverfahren, wie z.B. GSM (Global System for Mobile Communications) oder UMTS (Universal Mobile Telecommunications System), die einer Vielzahl von mobilen Stationen UE ermöglichen, parallel zueinander eine Funkverbindung aufzubauen und für einen Datenaustausch mit entfernten Einrichtungen zu benutzen.

Um eine störende Überlagerung der Signale der vielen Funkverbindungen zu verhindern, findet die Kommunikation z.B. über eindeutig zugeordnete Frequenzen innerhalb fest zugeordneter Zeitschlitze und/oder mit Hilfe kodierter Signale statt.

Zum Senden der Daten, zur Verarbeitung der empfangenen Signale und zur Rückerkennung der Daten aus einem empfangenen Signal benötigen die Basisstationen als auch die Funknetz-Steuereinrichtungen ein stabiles Zeit-Referenzsignal (Synchronisationssignal). Dieses Referenzsignal wird bisher üblicherweise von der Funknetz-Steuereinrichtung zusammen mit den Nutzdaten leitungsgebunden oder per Richtfunk an eine Basisstation BS übertragen oder wird aus dem Verbindungsnetz (z.B. einem Telephonnetz) generiert. Dieses Signal kann auch am Ort der Basisstationen durch genaue Uhren oder über ein Satellitensystem (GPS) erzeugt werden. Die Vor-Ort-Erzeugung ist aber aufwändig und teuer.

Erfolgt die Kommunikation zwischen einer Basisstation und der Funknetz-Steuereinrichtung jedoch mittels eines Paketversand-Netzes, (z.B. mittels Internetprotokoll (IP)), also über ein Datennetz, wie beispielsweise ein Ethernet-LAN (Local Area Network)oder ein asynchrones WAN (Wide Area Network), so ist es auf Grund von Verzögerungen zwischen einzelnen Übertragungswegen und auf Grund des Einflusses von Störgrößen oftmals nicht mehr gewährleistet, dass das Synchronisationssignal aus der Übertragungsleitung regeneriert werden kann. Dies gilt z. B. für Basisstationen, die über ein LAN in Gebäuden an die Funknetz-Steuereinrichtung angeschlossen sind. Diese LANs unterstützen die Übertragung des Zeit-Referenzsignals nicht immer (z. B. Ethernet).

Es ist daher die Aufgabe der vorliegenden Erfindung, eine einfache Möglichkeit zur Übertragung eines Synchronisationssignals insbesondere für ein Mobilfunk-Kommunikationssystem zu schaffen, bei dem die Basisstationen über ein asynchrones Datennetz an eine Funknetz-Steuereinrichtung angebunden sind.

Gelöst wird diese Aufgabe durch die im Patentanspruch 1 angegebenen Merkmale. Weitere Ausführungsformen der Erfindung sind Gegenstand von Unteransprüchen.

Der wesentliche erfinderische Gedanke besteht darin, das Synchronisationssignal über das Stromnetz an die Basisstationen des Systems zu übertragen.

Ein gattungsgemäßes Mobilfunk-Kommunikationssystem mit einem Kernnetz und einem Funkzugangsnetz mit zumindest einer Funknetz-Steuereinrichtung, an der mehrere Basisstationen angebunden sind, umfasst daher einen Taktgeber, mit dem ein Synchronisationssignal über das Stromnetz übertragen wird.

Das Synchronisationssignal ist vorzugsweise ein reines Taktsignal, kann aber auch ein Synchronisationsbefehl sein, der eine Identifikationskennung beinhaltet, die vom Empfänger erkannt wird.

Das Synchronisations- bzw. Taktsignal dient dabei der Synchronisation einer Funknetz-Steuereinrichtung mit einer Basisstation. Vorzugsweise werden aber auch die Basisstationen untereinander mit Hilfe des Taktsignals synchronisiert.

Der erfindungsgemäße Taktgeber ist dabei vorzugsweise am Standort der Funknetz-Steuereinrichtung angeordnet und überträgt das Synchronisationssignal an die Basisstationen sowie direkt an die Taktbaugruppe der Funknetz-Steuereinrichtung. Der Taktgeber kann aber auch an jedem beliebigen anderen Ort angeordnet sein und das Referenzsignal über das Stromnetz an eine Funknetz-Steuereinrichtung und die daran angebundenen Basisstationen übertragen.

Das Synchronisationssignal kann entweder vom Taktgeber selbst erzeugt oder von einem anderen Signal abgeleitet sein, das z.B. vom Kernnetz oder vom RC eingespeist wird.

Gemäß einer bevorzugten Ausführungsform der Erfindung sind mehrere Basisstationen über ein asynchrones Datennetz, insbesondere ein LAN oder WAN, an eine Funknetz-Steuereinrichtung angeschlossen.

Die Funknetz-Steuereinrichtung kann auch eine verteilte Architektur aufweisen, wobei mehrere Teilnehmerebenenfunktionen UPF oder Steuerebenenfunktionen CPF einzeln am Datennetz angeschlossen sind. Dabei werden zumindest die Teilnehmerebenenfunktionen mit dem Synchronisationssignal versorgt.

Gemäß einer speziellen Ausgestaltung der Erfindung haben die Basisstationen einen Synchronisationssignalempfänger, der das Synchronisationssignal an der Spannungsversorgung abgreift und an die Taktbaugruppe der Basisstationen weiterleitet.

Die Erfindung wird nachstehend anhand der beigefügten Zeichnungen beispielhaft näher erläutert. Es zeigen:
Figur 1 ein Mobilfunk-Kommunikationssystem gemäß einer Ausführungsform der Erfindung;
Figur 2 ein Mobilfunk-Kommunikationssystem gemäß einer anderen Ausführungsform der Erfindung; und
Figur 3 ein bekanntes Mobilfunk-Kommunikationssystem.

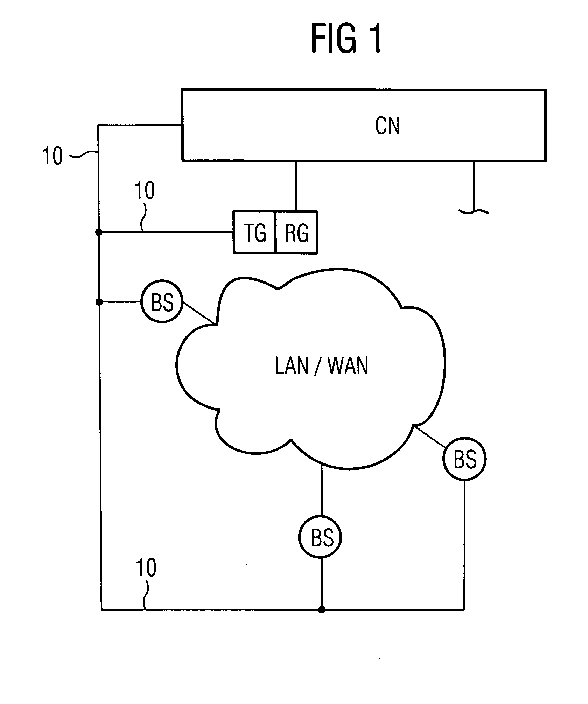

Das in Figur 1 dargestellte Mobilfunk-Kommunikationssystem umfasst ein Kernnetz CN und ein Funkzugangsnetz RAN. Das Funkzugangsnetz RAN hat mehrere Funknetz-Steuereinrichtungen RC mit einer Vielzahl von Basisstationen BS.

Die Anbindung der Basisstationen BS an die Funknetz-Steuereinrichtung erfolgt unter Ausnutzung eines Datennetzes wie z.B. eines asynchronen LAN oder WAN, das z. B. IP-basiert sein kann.

Am Standort der Funknetz-Steuereinrichtung ist ein Taktgeber TG vorgesehen, der ein Synchronisationssignal an die einzelnen Basisstationen BS über das Stromnetz 10 ausgibt. Das Synchronisationssignal kann außerdem direkt an die Taktbaugruppe der Funknetz-Steuereinrichtung weitergeleitet werden.

Die einzelnen Basisstationen haben einen Synchronisationssignalempfänger, der das Synchronisationssignal an der Stromversorgung abgreift und an die Taktbaugruppe der Basisstation BS weiterleitet

Eine weitere, in Fig. 2 gezeigte, Ausgestaltung des RAN stellt die Aufteilung der Funknetz-Steuereinrichtung RC in räumlich getrennte Teilnehmerebenenfunktionen UPF (UPF: User Plane Functions) und Steuerebenenfunktionen CPF (CPF: Control Plane Functions) dar. Die Teilnehmerebenenfunktionen dienen insbesondere zur Übertragung von Sprache und Daten einer mobilen Station UE während die Steuerebenenfunktionen Verwaltungsaufgaben im System übernehmen.

Der Taktgeber TG ist im Dargestellten Beispiel an einem beliebigen Ort angeordnet. Dies ist bei einer konzentrierten RC möglich, bei einer in UPF/CPF aufgeteilten Funknetz-Steuereinrichtung nötig - hier gibt der Taktgeber TG dann neben den Basisstationen BS auch an die UPF das Synchronisationssignal über das Stromnetz 10 aus.

Die mit dem Referenzsignal versorgten Einrichtungen haben einen Synchronisationssignalempfänger, der das Synchronisationssignal abgreift und an nachfolgende Schaltkreise weiterleitet.

Das Synchronisationssignal braucht insbesondere nicht verschlüsselt zu werden.

Bezüglich Figur 3 wird auf die Eingangs gemachten Erläuterungen verwiesen.

## Patentansprüche

1. Mobilfunk-Kommunikationssystem, umfassend ein Kernnetz (CN) und ein Funk-Kommunikationsnetz (RAN) mit zumindest einer Funknetz-Steuereinrichtung (RC), an der mehrere Basisstationen (BA) angebunden sind, die mit mobilen Stationen (UE) über Funk kommunizieren,
**dadurch gekennzeichnet,**
**dass** ein Taktgeber (TG) vorgesehen ist, mit dem ein Synchronisationssignal zur Synchronisation der Basisstationen (BS) mit der zugehörigen Funknetz-Steuereinrichtung (RC) über das Stromnetz übertragen wird.

2. Mobilfunk-Kommunikationssystem nach Anspruch 1
**dadurch gekennzeichnet,**
**dass** das Synchronisationssignal ein Taktsignal ist.

3. Mobilfunk-Kommunikationssystem nach Anspruch 1 oder 2
**dadurch gekennzeichnet ,**
**dass** die Basisstationen durch ein vom Signal- bzw. Taktgeber (TG) zugeführtes Synchronisationssignal untereinander synchronisiert sind.

4. Mobilfunk-Kommunikationssystem nach Anspruch 1
**dadurch gekennzeichnet,**
**dass** der Taktgeber (TG) am Standort der Funknetz-Steuereinrichtung (RC) angeordnet ist und das Synchronisationssignal über das Stromnetz (10) an die zugehörigen Basisstationen (BS) übertragen wird.

5. Mobilfunk-Kommunikationssystem nach Anspruch 1
**dadurch gekennzeichnet,**
**dass** der Taktgeber (TG) separat vom übrigen System angeordnet ist und das Synchronisationssignal über das Stromnetz (10) an die Basisstationen (BS) übermittelt wird.

6. Mobilfunk-Kommunikationssystem nach einem der vorhergehenden Ansprüche
**dadurch gekennzeichnet,**
**dass** das Synchronisationssignal von der Funknetz-Steuereinrichtung (RC) erzeugt und an den Taktgeber (TG) geleitet oder vom Taktgeber (TG) an die Funknetz-Steuereinrichtung (RC) geleitet wird.

7. Mobilfunk-Kommunikationssystem nach einem der vorhergehenden Ansprüche
**dadurch gekennzeichnet,**
**dass** die Basisstationen (BS) einen Synchronisationssignalempfänger aufweisen, der das Synchronisationssignal an der Stromversorgung abgreift und an die Taktbaugruppe der Basisstationen (BS) weiterleitet.

8. Mobilfunk-Kommunikationssystem nach einem der vorhergehenden Ansprüche
**dadurch gekennzeichnet,**
**dass** mehrere Basisstationen (BS) über ein Datennetz (LAN/WAN) an eine Funknetz-Steuereinrichtung angebunden sind und über das Stromnetz synchronisiert werden.

9. Mobilfunk-Kommunikationssystem nach Anspruch 8
**dadurch gekennzeichnet,**
**dass** mehrere Teilnehmerebenenfunktionen (UPF) oder Steuerebenenfunktionen (CPF) am Datennetz (LAN/WAN) angeschlossen sind.

10. Mobilfunk-Kommunikationssystem nach Anspruch 9
**dadurch gekennzeichnet,**
**dass** zumindest die Teilnehmerebenenfunktionen (UPF) mit dem Synchronisationssignal versorgt werden.

11. Mobilfunk-Kommunikationssystem nach einem der Ansprüche 8 bis 10,
**dadurch gekennzeichnet,**
**dass** das Datennetz (LAN/WAN) auf einem Paketversand-Protokoll, z. B. dem Internetprotokoll (IP) basiert.

12. Mobilfunk-Kommunikationssystem nach Anspruch 1 oder 3,
**dadurch gekennzeichnet,**
**dass** der Taktgeber (TG) Bestandteil des Kernnetzes (CN) ist.
